# EUROPEAN PATENT SPECIFICATION

(11) **EP 0 768 491 B1**
(45) Date of publication and mention of the grant of the patent: **26.01.2005**
(21) Application number: 96116196.5
(22) Date of filing: 10.10.1996
(51) Int. Cl.: F21V 3/04

(54) **Colored and decorative lighting**
Gefärbte und dekorative Beleuchtung
Eclairage coloré et décoratif

(30) Priority: 12.10.1995 US 542238
(43) Date of publication of application: 16.04.1997
(73) Proprietor: OSRAM SYLVANIA INC., Danvers, MA 01923 (US)
(72) Inventor: Fraizer, Robert L., Seymour, Indiana 47274 (US)
(74) Representative: Lemke, Jörg-Michael, Dipl.-Ing.

(56) References cited:
- DE-A- 2 748 981
- DE-A- 2 820 113
- DE-U- 8 800 049
- US-A- 4 259 388
- US-A- 4 763 234

## Description

### BACKGROUND OF THE INVENTION

The present invention relates to lighting, and particularly to a lamp, e.g., an automotive lamp having one or more colors applied to its lens using a thermally transferred decal. The invention also relates to this lens and to methods for producing the lens and the lamp assembly.

Lenses for automotive lamps are generally molded from polycarbonate or acrylic polymers. This practice has been successful for clear or colored lenses. However, modern automotive styling has created a need for a combination of clear and colored areas in a single lens. One example of such styling is a lens having an amber reflex within a clear lens.

Attempts have been made to produce a colored area and a clear area within a single lens by separately molding the colored shape, inserting it into a second mold, and molding the clear portion of the lens around it, a practice called "insert molding" in the art. However, insert molding is labor intensive, adding to the cost of the lens. Further, single color or clear lenses are typically overcoated with a protective, abrasion resistant, hard coating. An insert molded lens, however, cannot similarly be overcoated because of microcracking and failure of the overcoating at the interface of the colored insert and the clear portion of the lens.

Accordingly, it is an object of the present invention to provide a single lens of one or more colors and a lamp assembly, e.g., an automotive lamp assembly using such a lens that overcome the disadvantages of the prior art.

It is another object of the invention to provide a lamp, e.g., an automotive lamp, as well as a lens for such a lamp, having one or more colors applied to the lens surface using a thermally transferred decal and a protective coating over the color layer.

It is yet another object of the invention to expand automotive styling possibilities by fabrication of an automotive lamp lens combining colored and clear regions, or more than one colored region, that could successfully be overcoated with a protective, abrasion resistant coating.

It is still another object of the invention to provide methods for producing a lens of one or more colors and a lamp assembly including such a lens that use thermal transfer technology to apply a color layer to the surface of the lens.

### SUMMARY OF THE INVENTION

In accordance with these objects, I have developed a heat transfer method for fabricating a lamp in which lens color is provided by a heat transfer decal using thermal transfer technology.

In one aspect, the invention is a multilayered lens for a lamp, e.g., an automotive lamp in accordance with claim 1. Document DE-28 20 113 discloses a multilayered lens according to the preamble. In narrower embodiments, the film is patterned to include two or more colored regions and/or indicia.

In another aspect, the invention is a lamp assembly, e.g., an automotive lamp assembly including a housing, a light source mounted within the housing, and the above-described multilayered lens fixed to said housing, said housing and said lens together enclosing said light source.

In yet other aspects, the invention is a method of fabricating the multilayered lens or lamp assembly. The method involves forming a transparent, unitary, polymeric lens blank having an inner surface and an outer surface; applying, by heat transfer from a carrier surface, a thin, adherent, translucent, color layer on and conforming to at least a portion of the inner or the outer lens blank surface, the color layer including a thermoplastic polymer film of at least one color; and coating at least the color layer with a thin, adherent, transparent, protective coating. The method of fabricating the lamp assembly further involves mounting a light source within a housing such that light from the light source is projected in a preselected direction, and fixing the multilayered lens to the housing such the said housing and the lens together enclose the light source, the light from the light source being projected through the lens and the color layer. In a narrower embodiment, the light source is a first light source; a second light source is also mounted within the housing such that light from the first light source is projected in a first preselected direction and light from the second light source is projected in a second preselected direction, which may be the same as or different from the first direction; and the housing and lens together enclose the first and second light sources, such that the light from the second light source is projected through the lens, and the light from the first light source is projected through the lens and the color layer.

### BRIEF DESCRIPTION OF THE DRAWINGS

For a better understanding of the present invention, together with other objects, advantages, and capabilities thereof, reference is made to the following Description and appended Claims, together with the Drawings in which:
Figure 1 is a cross-sectional elevation view of an automotive headlamp and lens in accordance with one embodiment of the present invention;
Figure 2 is an elevation view of an automotive headlamp lens in accordance with another embodiment of the present invention;
Figure 3 is a cross-sectional elevation view of a portion of the headlamp lens of Figure 2, taken along line III - III, showing the reflex region of the lens;
Figure 4 is an elevation view of an automotive rear deck lens in accordance with another embodiment of the present invention;
Figure 5 is a cross-sectional elevation view of a rear deck lamp assembly including a portion of the headlamp lens of Figure 4, taken along a line corresponding to line V - V, showing the multilayer construction of the lens;
Figure 6 is a cross-sectional elevation view of a portion of a headlamp lens in accordance with yet another embodiment of the invention, showing a second color layer overlying a first color layer;
Figures 7 and 8 are elevation views of the headlamp lens of Figure 6 illustrating the daytime and nighttime effects, respectively, of the lens;
Figure 9 is an elevation view of an automotive lamp in accordance with still another embodiment of the present invention;
Figure 10 is an elevation view of the reverse side of the lens shown in Figure 9;
Figure 11 is a schematic illustration of a portion of a heat transfer apparatus for applying a color layer to the lenses in accordance with certain embodiments of the invention.

### DETAILED DESCRIPTION OF THE PREFERRED EMBODIMENTS

An exemplary embodiment of the lamp in accordance with the invention are described herein is an automotive headlamp including multilayered lens blank fabricated using thermal transfer techniques. The multilayered lens is a transparent, unitary, polymeric lens blank with a thin, translucent, color layer applied to its inner or outer surface using a thermally transferred, colored, heat transfer decal. A thin, transparent, protective coating overlies the color layer.

The term "heat transfer decal" as generally used in the art means an opaque or transparent printed artwork or other graphic work which has been applied, in reverse, to one side of a carrier film. The "graphic" in this embodiment can be any color or shape, and can cover the entire lens surface or only a portion thereof. The shaped decal is heat transferred to the substrate lens using thermal transfer techniques described more fully below.

The description herein of various illustrative embodiments shown in the Drawings is not intended to limit the scope of the present invention, but merely to be illustrative and representative thereof.

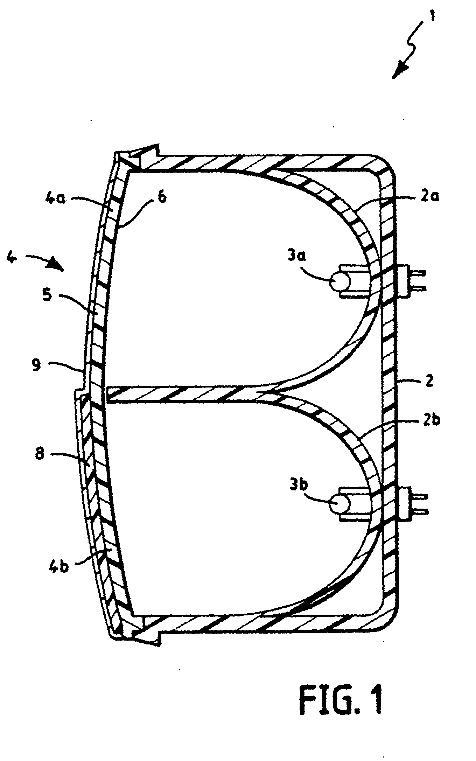

Referring to Figure 1, automotive lamp assembly 1 includes housing 2 including reflectors 2a and 2b, light sources 3a and 3b mounted within reflectors 3a and 3b respectively, and lens 4 fixed to housing 2 to enclose light sources 3a and 3b. Housing 2 includes a polymeric base and a reflective coating (not shown). The polymeric base may be fabricated from, e.g., acrylic, polycarbonate, bulk molding compound (BMC, a glass fiber reinforced, thermosetting, unsaturated polyester resin material including a mold-release compound and filler material), Nylon, or polypropylene. The reflective coating may be fabricated from, e.g., vapor deposited aluminum over the entire inner reflector surface to reflect light emitted from light sources 3a and 3b. A typical thickness for the reflective coating is about 800 - 1000 Å.

Lens 4 is a multilayered lens having transparent, unitary, polymeric lens blank 5 as a base. Lens blank 5 includes inner surface 6 and outer surface 7. Thin, translucent, heat transferred, color layer 8 overlays and conforms to lens portion 4b at lens blank outer surface 7, covering light source 3b and reflector 2b. Color layer 8 includes a thermoplastic polymer film providing at least one color, e.g., red or amber, to lens portion 4b. Lens portion 4a covers light source 3a and reflector 2a, and includes no color layer. Lens portion 4a, light source 3a, and reflector 2a may provide, e.g., a headlamp, while lens portion 4b, light source 3a, and reflector 2a may provide, e.g., a turn signal or running light for an automobile. Thin, transparent, protective (e.g., abrasion resistant) coating 9 is deposited on lens blank 5 to overlie, conform to, and protect at least lens portion 4b and color layer 8.

When light sources 3a and 3b are activated, together or separately, their light is observed from outside lamp assembly 1 as separate regions of white and colored light, respectively, shining through a unitary lens. White light is observed through lens portion 4a, which includes part of lens blank 5 and, if present, protective coating 9. Colored, e.g., red or amber light is observed through lens portion 4b, which includes three layers: part of lens blank 5, color layer 8, and protective coating 9. Alternatively, color layer 8 and protective layer 9 may be provided on lens portion 4b at lens blank inner surface 6.

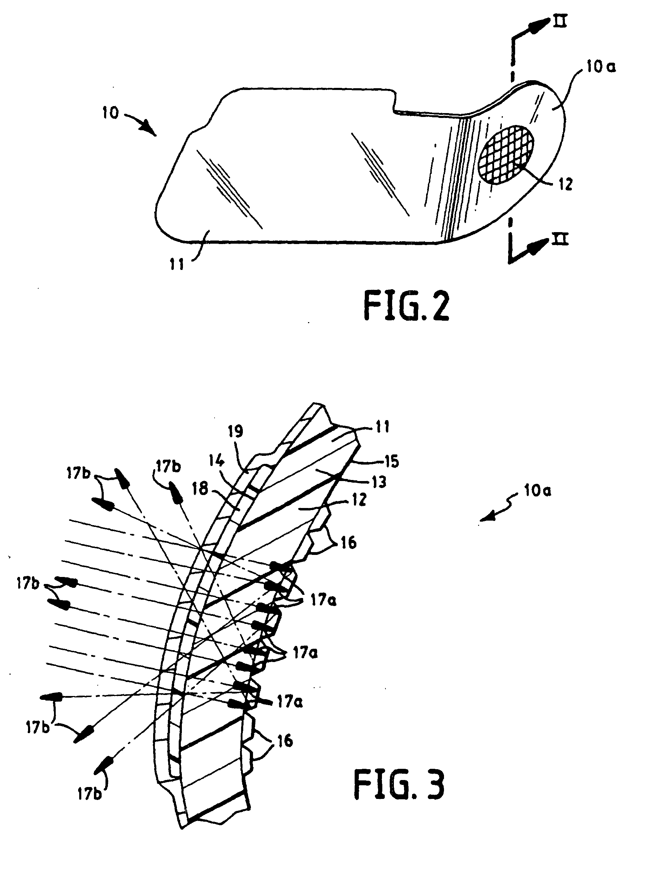

Another embodiment, illustrating the application of the invention to provide a colored reflective or reflex region in a unitary lens, is shown in Figures 2 and 3. Figure 2 shows non-planar, unitary, automotive headlamp lens 10 including clear portion 11, through which passes a focused beam of light from a light source (not shown), and colored reflective portion 12, e.g. amber, on recurved end 10a of clear portion 11. Reflective portion 12 acts as a side reflector for the front end of an automobile.

Figure 3 is a cross-sectional view of a portion of recurved end 10a of the headlamp lens of Figure 2, taken along line III - III of Figure 2, showing the multilayered nature of reflective portion 12 of lens 10. Lens blank 13 is formed from a clear polycarbonate polymeric material, and provides a base for both clear portion 11 and reflective portion 12. Outer surface 14 of lens blank 13 is smooth, while most of its inner surface 15 is slightly textured. In reflective portion 12, cubic reflectors 16 are formed at inner surface 15 to reflect light passing through lens blank 13. This reflection is indicated in Figure 2 by arrows 17a, indicating light entering reflective portion 12 through outer surface 14 toward cubic reflectors 16, and arrows 17b, indicating light reflected by cubic reflectors 16 and exiting reflective portion 12 through outer surface 14.

Cubic reflectors typically are not truly cubic, but are formed in the shape of a truncated pyramid having generally square reflective surfaces extending generally parallel to inner surface 15. However, the term "cubic reflector", as used herein, is intended to mean any equivalent feature of the inner surface of an automotive lamp lens provided for the purpose of diffusing and/or reflecting externally generated light entering the lamp in the region of the cubic reflectors.

Translucent, heat transferred, color layer 18, including a thermoplastic polymer film typically amber in color, covers lens blank 13 only in reflective portion 12. Abrasion resistant protective hardcoat layer 19 covers the entire outer surface of lens 10, protecting color layer 18 and outer surface 14 of the lens blank. Alternatively, a protective hardcoat layer may be applied to protect only the color layer, but complete coverage of the outer surface of the lens is preferred.

Thus, light from outside the lens, e.g., white light shining on reflective portion 12 from a headlamp of an automobile approaching the lens from the side, passes through transparent hardcoat layer 19, translucent color layer 18, and lens blank 13, and is reflected by cubic reflectors 16. The reflected light passes from lens blank 13 through amber color layer 18 and hardcoat layer 19, appearing to an observer as amber light. Light approaching the remainder of lens blank 13, i.e., clear portion 11, from the same outside source is not reflected to the same degree. The amber reflection from the cubic reflectors is similar to that achieved with prior art cubic reflectors inserts. However, the disadvantages of prior art two color lenses are avoided.

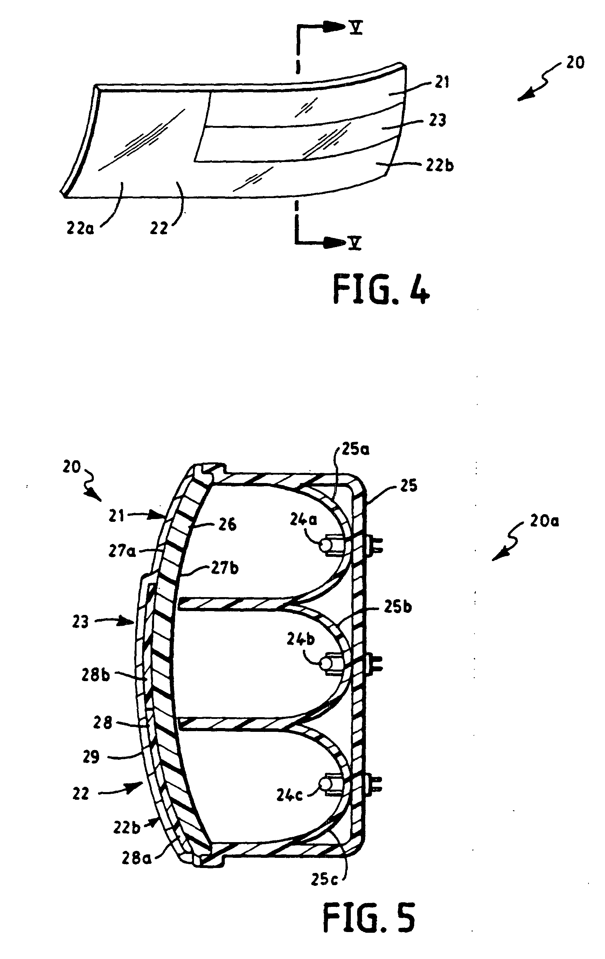

Figures 4 and 5 show yet another embodiment of the automotive lens of the invention, illustrating the application of multiple colors to a clear plastic lens. In Figure 4, unitary lens 20 for the rear deck of an automobile includes first, clear portion 21, second, colored portion 22 (including portions 22a and 22b), and third, differently colored portion 23. Clear portion 21 provides, e.g., a white back-up light, while colored portion 22 provides, e.g., a red brake light at portion 22a and a red running light at portion 22b, and colored portion 23 provides, e.g., an amber turn signal.

Figure 5 is a cross-sectional view of rear deck assembly 20a, including lens 20 of Figure 4, taken along a line corresponding to line V - V of Figure 4 and showing the multilayered nature of the colored portions of the lens. Separate focused beams of light pass through portions 21, 23, 22b, and 22a from light sources 24a, 24b, 24c, and a light source (not shown) for the running light at portion 22b, respectively. The light sources are mounted within separate reflectors 25a, 25b, 25c, and a reflector (not shown) for the running light at portion 22b for focusing the light from the respective light sources. The separate focused beams of light are observed from outside the lens as, e.g., white (at portion 21), amber (at portion 23), and red (at portions 22b and 22a). Conveniently, all four reflectors may be provided by single housing 25 sealed to the rim of lens 20 to provide, with the four light sources, a sealed rear deck lamp assembly.

Lens blank 26 is formed from a clear polycarbonate polymeric material, and provides a base for clear portion 21 and colored portions 23, 22b, and 22a. Typically, outer surface 27a of lens blank 26 is smooth, while inner surface 27b may be slightly textured (not shown) to diffuse the light emitting from the lamp assembly. If desired, cubic reflectors similar to those shown in Figure 3 may be formed on part or all of the inner surface of any of regions 21, 22a, 22b, or 23 to provide a reflective region.

Translucent, heat transferred color layer 28 covers lens blank 26 only in colored portions 22a, 22b, and 23. Color layer 28 includes a thermoplastic polymer film patterned to provide two colors, for example red area 28a to cover second, colored portion 22 (including portions 22a and 22b) and amber area 28b to cover third, colored region 23. First portion 21 is not covered by color layer 28. Abrasion resistant, protective hardcoat layer 29 covers the entire outer surface of lens 20, protecting color layer 28 and outer surface 27a of the lens blank. Alternatively, hardcoat layer 29 may be applied to protect only color layer 28, but complete coverage of the outer surface of the lens is preferred.

When any of the light sources within the lamp assembly are activated, its light is observed from outside the lamp assembly as either white, red, or amber light, depending on the lens region being illuminated, or more than one region may be illuminated simultaneously.

Figures 4 and 5 show two colors applied to the outer surface of the lens blank using a single two-color heat transfer layer only in the colored areas. Alternatively, a color layer may be applied over the entire outer surface of the lens blank, the part of the layer covering the non-colored area being a clear, transparent portion. Also alternatively, a color layer and a protective layer may be applied to the inner surface of the lens blank. In alternate embodiments, one or several colors may be applied by a single heat transfer decal, or separate heat transfer decals may be applied for each color. Also, one or more color regions of a color layer may include indicia, as described in further detail below.

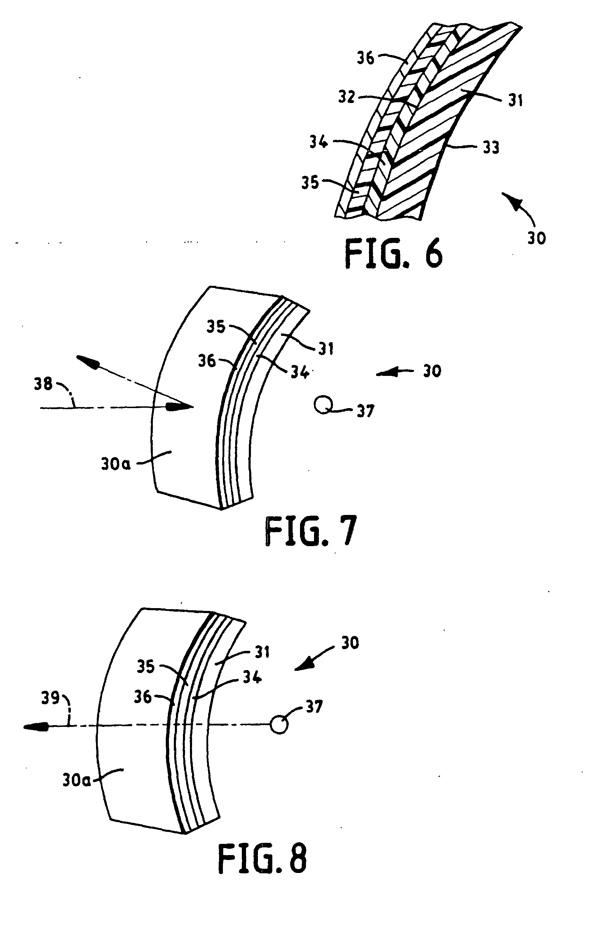

Figures 6, 7, and 8 illustrate still another embodiment of the invention. Figure 6 shows lens portion 30 in which clear lens blank 31 includes outer surface 32 and inner surface 33. Translucent first color layer 34 of color "A" covers outer surface 32, and translucent second color layer 35 of color "B" overlays first color layer 34. Each color layer includes a thermoplastic polymer film, which provides its color. Color "B" of second color layer 35 is a different color from color "A" of first color layer 34. Typical examples of colors "A" and "B" are described below. Alternatively, first color layer 34 and second color layer 35 may not be coextensive. That is, the first, second, or both color layers may extend beyond the area where the layers overlap. Transparent, abrasion resistant, protective hardcoat layer 36 overlies and protects at least color layers 34 and 35.

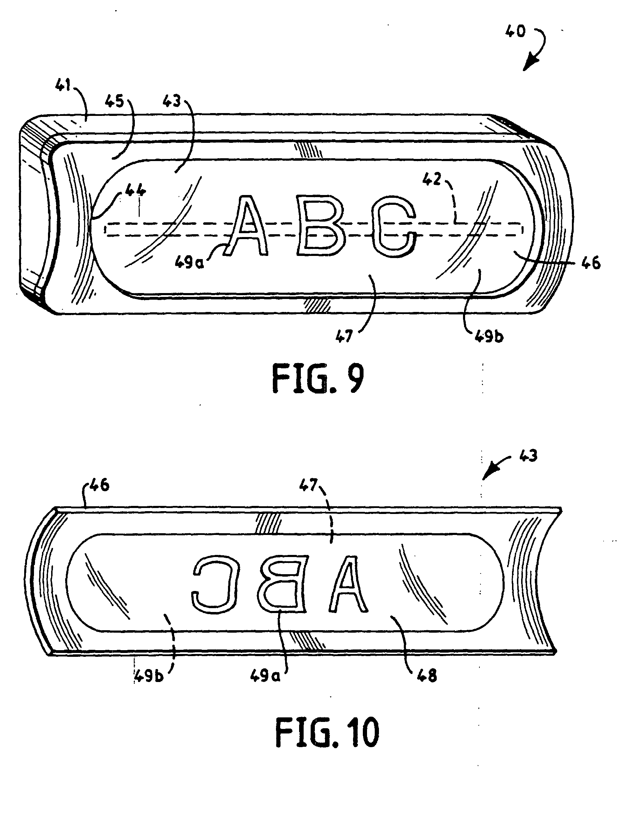

An example of the usefulness of this embodiment is illustrated in Figures 7 and 8. Figure 7 shows the typical daytime appearance of the multilayer portion 30 of the lens, i.e., when light source 37 is not activated. Daylight from outside the lamp, shown schematically by arrow 38, strikes and reflects off of outer surface 30a of lens portion 30, appearing to an observer as color "B", the color of second color layer 35.

Figure 8 shows the typical nighttime appearance of the multilayer portion 30 of the lens, i.e., when light source 37 is activated. Light from light source 37, shown schematically by arrow 39, shines through lens blank 31, first and second color layers 34 and 35, and hardcoat layer 36 to lens portion outer surface 30a, appearing to an observer as a blend of color "A" and color "B" or, in certain cases, as color "A".

One example of a typical combination of colors is one in which "A" is red and "B" is amber. The observed colors would be amber, color "B", when the light source is inactive and orange or red-orange, a blend of "A" and "B", when the light source is active. In another example, "A" is red or amber, while "B" is another color applied as a very thin, translucent color layer. For example, "B" may be a neutral color or the same color as the automobile finish. The observed colors would be color "A", amber or the warning color red when the light source is active and color "B", a neutral color or the vehicle finish color when the light source is inactive. Thus, the lens color would blend with the color of the vehicle finish when the light source is inactive, but would change to a color required for safe operation of the vehicle when the light source is activated. (The color when the light source is activated is not observed as a blend, because the outer color layer is very thin. The optimum thickness of the outer color layer may be empirically determined.) In yet another example, the first color layer may provide indicia in color "A" alone, on a clear background, or on a background of another color, "A'", so that only color "B" is apparent when the light source is inactive, but the indicia in color "A", the indicia and color "A'", or blends, e.g., of the indicia and "A'" with "B" appear when the light source is activated. Other color combinations are possible and are within the scope of this invention.

Such combinations can provide lighting that is less obtrusive or that separates the choice of apparent lens color from the lighting colors required by safety considerations, broadening automotive design possibilities. Also alternatively, the color layers may be applied to the inner surface of the lens blank, with a color layer in color "B" being applied before a color layer in color "A", and a protective hardcoat layer being applied over at least both color layers.

Figures 9 and 10 illustrate still another embodiment of the invention, in which a neon brake light is provided with a lens having a color layer applied thereto, as described above, the color layer including a thermoplastic polymer film exhibiting colored indicia on a background color. Figure 9 illustrates neon lamp assembly 40 including housing 41, neon light source 42 mounted within housing 41, and non-planar lens 43. Lens 43 is mounted within opening 44 of rim 45 of housing 41 and is sealed to the rim.

Figure 10 shows in more detail lens 43 including transparent lens blank 46, translucent color layer 47 overlying inner surface 48 of lens blank 46 positioned to be, e.g., centered within opening 44, and a transparent protective layer (not shown) overlying color layer 47. Color layer 47 includes a pattern of indicia 49a in, for example, opaque black, on background 49b in, for example, translucent red. Alternatively, a color layer may include translucent indicia, or translucent, transparent, or clear indicia on a translucent background. As used herein, the term "indicia" is intended to mean letters, numbers, lines, symbols, and other graphics used for informational or decorative purposes. Also alternatively, background 49b may cover the entire inner surface 48 of lens blank 46 with indicia 49a centered in opening 44 when lens 43 is mounted in housing 41.

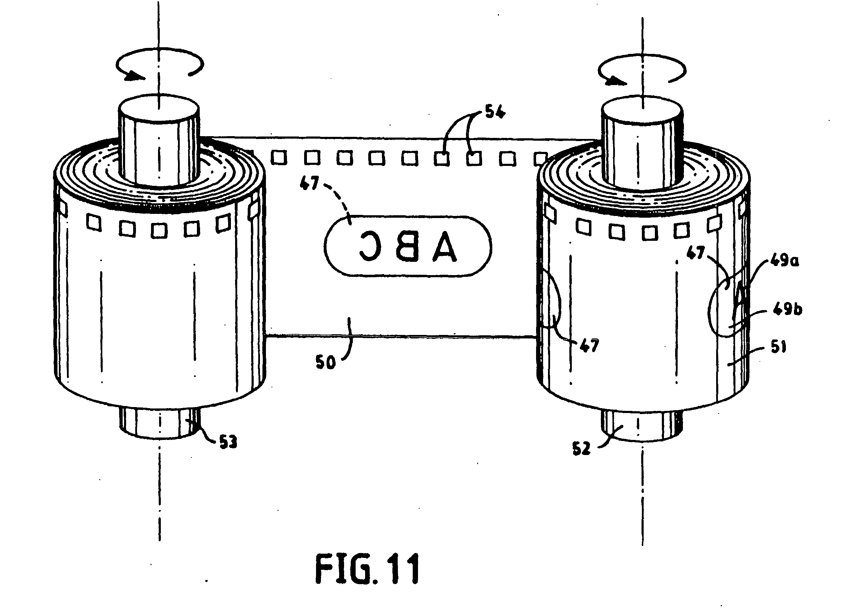

Figure 11 illustrates a typical process for the fabrication of the lenses described herein. Heat transferable carrier sheet 50 has imprinted on its surface heat transfer color layer 47, including a thermoplastic polymer film providing both indicia 49a and background 49b. Sheet 50 conveniently may be in the form of flexible sheet roll 51 wound in scroll fashion on a pair of rollers, feed roller 52 and take up roller 53. Sheet roll 51 normally includes a plurality of color layers 47 imprinted thereon, for successive transfer to a series of lens blanks (not shown).

Color layer 47 may be transferred using, e.g., a vertical heat transfer press or a roll-on heat transfer apparatus, both conventional in the heat transfer industry. A typical press operates at a temperature of about 350° - 375°F, a pressure of about 400 - 450 lb/in², and a dwell time of about 3 - 5 seconds. A conventional heat transfer roll carrier (not shown) positions sheet roll 51 by means of perforations 54 in one or both of its margins to index color layer 47 to be in register with a single lens blank mounted at a transfer station (not shown). Typically, the lens blank, e.g., blank 46 shown in Figure 10, is supported during the heat transfer process by a concave holding fixture (not shown). The holding fixture is designed to position the lens blank to locate it exactly in the proper plane and to allow no movement of the blank during the transfer operation. At the transfer station, a heating plate (not shown) heats and presses sheet 50 and color layer 47 against the lens blank for heat softening of color layer 47 and transfer of the color layer to the lens blank.

The heat transfer sheet carrier positions carrier sheet 50 in, e.g., a vertical press heat transfer apparatus with the color layer 47 indexed over the lens blank. An electric eye or mechanical stop determines the position of the carrier transfer sheet 50 and stops the linear motion. A heated vertical press is lowered to heat and press color layer 47 on carrier sheet 50 against the lens blank for a time sufficient for transfer of the color layer to the lens blank. Alternatively, the lens blank may be lifted upward and pressed against the heated press by the holding fixture. Also alternatively, a roll-on type of heat transfer apparatus may be used. A heated, e.g., silicone roller is placed over the portion of transfer sheet 50 carrying color layer 47 and is rolled slowly over the sheet surface to transfer the color layer to the lens blank. The combination of heat and pressure normally provides good adherence of the color layer to the lens blank without the use of adhesives at the color layer-lens blank interface. On lifting of the heated vertical press or heated roller from color layer 47, the bond between the color layer and the lens blank is now greater than its adhesion to the carrier transfer sheet, and the carrier sheet separates from the color layer leaving the color layer bonded to the lens blank. The coated lens blank is then removed from the holding fixture and replaced with an uncoated lens blank, while another color layer is indexed forward into register with the new lens blank for heat transfer thereto. Alternatively, a different type of heat transfer apparatus and process may be used in a similar manner to transfer the reflective coating from the carrier film to the housing blank.

The invention described herein presents to the art novel, improved lenses for lighting, e.g., automotive lighting having one or more colored regions without the use of hard polymeric colored inserts into the polymeric lens surface. This unitary construction avoids the microcracking and failure of the hardcoating on the lens at the lens-insert interface. Manufacture of the novel lens using thermal transfer techniques is less complicated and more economical than prior art insert molding techniques.

While there has been shown and described what are at present considered the preferred embodiments of the invention, it will be apparent to those skilled in the art that modifications and changes can be made therein without departing from the scope of the present invention as defined by the appended Claims.

## Claims

1. A multilayered lens (4, 10, 20) for a lamp, said lens comprising:
a transparent, unitary, polymeric lens blank (5, 13) having an inner surface (6, 15) and an outer surface (7, 14);
a thin, translucent, color layer (8, 18) disposed on, conforming to, and bonded to at least a portion (4b, 12) of a selected one of said lens blank inner and outer surfaces (6, 7; 15, 14), **characterised by** said color layer (8, 18) including a thermoplastic polymer film of at least one color transferred from a heat transfer decal (47, 50); and
a thin, transparent, protective coating (9, 19) disposed on and overlying at least said color layer (8, 18).

2. A lens (4, 10) in accordance with claim 1 wherein said film is patterned to include two or more colored regions.

3. A lens (4, 10) in accordance with claim 1 wherein said film is patterned to include indicia.

4. A lens in accordance with claim 1 wherein at least a portion of said lens blank (13) inner surface (15) is textured to form cubic reflectors (16) to provide a reflective pattern (12) visible from said lens blank outer surface (14); and said color layer (18) and said protective coating (19) are disposed on said outer surface (14) to overlie at least said reflective pattern (12).

5. A lens (20) in accordance with claim 1 wherein said color layer is a first color layer (22) and said at least one color includes a first color; and further comprising:
a second thin, translucent, color layer (23) disposed on, conforming to, and bonded to at least a portion of said first color layer (22) between said first color layer and said protective coating (29), said second color layer including a thermoplastic polymer film of at least a second color different from said first color; wherein said protective coating (29) is disposed on and overlies at least said first color layer (22) and said second color layer (23).

6. A lens (20) in accordance with claim 5 wherein:
said first color layer (22) is disposed on said lens blank (26) outer surface (27a); and
the observable color at the outer surface (27a) of said multilayered lens of the portion of said lens (20) on which said second color layer (23) overlies said first color layer (22) is said second color when said lens is lighted from outside said multilayered lens outer surface and said first color or a blend of said first color and said second color when said lens (20) is lighted from inside said lens blank inner surface (27b).

7. An automotive lamp containing a multilayered lens (4, 10, 20) in accordance with claim 1.

8. A lamp assembly (1) comprising:
a housing (2);
a light source (3a, 3b) mounted within said housing; and a multilayered lens (4, 10, 20) in accordance with claim 1 fixed to said housing, said housing and said lens together enclosing said light source.

9. A lamp assembly (1) in accordance with claim 8 wherein said film is patterned to include two or more colors.

10. A lamp assembly (1) in accordance with claim 8 wherein said film is patterned to include indicia.

11. A lamp assembly (1) in accordance with claim 8 wherein at least a portion of said lens blank (13) inner surface (15) is textured to form cubic reflectors (16) to provide a reflective pattern (12) visible from outside said assembly; and said color layer (18) and said protective coating (19) are disposed on said lens blank outer surface (14) to overlie at least said reflective pattern (12).

12. A lamp assembly (1) in accordance with claim 8 wherein said color layer is a first color layer (22) and said at least one color is a first color; and further comprising:
a second, thin, translucent, color layer (23) disposed on, conforming to, and bonded to at least a portion of said first color layer (22) between said first color layer and said protective coating (29), said second color layer including a thermoplastic polymer film of at least one color; wherein said thin, transparent, protective coating (29) is disposed on and overlies at least said first color layer (22) and said second color layer (23).

13. A lamp assembly in accordance with claim 12 wherein:
said first color layer is disposed on said lens blank outer surface; and
the observable color from outside said assembly of the portion of said lens on which said second color layer overlies said first color layer is said second color when said light source is switched off and said first color or a blend of said first color and said second color when said light source is switched on.

14. A lamp assembly in accordance with claim 8 wherein said light source is a first light source mounted within said housing such that light from said first light source is projected in a first direction; and further comprising:
a second light source mounted within said housing such that light from said second light source is projected in a second direction, which may be the same as or different from said first direction;
and wherein said housing and said lens together enclose both said first light source and said second light source; and the light from at least one of said first and second light sources is projected through said lens and said color layer such that the observable color from outside said assembly of the light from said first light source is different from that of the light from said second light source.

15. A lamp assembly in accordance with claim 8 wherein said lamp assembly is an automotive lamp assembly.

16. A method of fabricating a multilayered lens for a lamp, said method comprising:
forming a transparent, unitary, polymeric lens blank having an inner surface and an outer surface;
applying a thin, adherent, translucent, color layer on and conforming to at least a portion of a selected one of said lens blank inner and outer surfaces, **characterised by** applying said color layer by heat transfer from a carrier surface said color layer including a thermoplastic polymer film of at least one color; and
coating at least said color layer with a thin, adherent, transparent, protective coating.

17. A method in accordance with claim 16 wherein said lamp is an automotive lamp.

18. A method of fabricating a lamp assembly, said method comprising the steps of:
forming a transparent, unitary, polymeric lens blank having an inner surface and an outer surface;
applying, by heat transfer from a carrier surface, a thin, adherent, translucent, color layer on and conforming to at least a portion of a selected one of said lens blank inner and outer surfaces, said color layer including a thermoplastic polymer film of at least one color;
coating at least said color layer with a thin, adherent, transparent, protective coating to form a multilayered lens;
mounting a light source within a housing such that light from said light source is projected in a preselected direction; and
fixing said multilayered lens to said housing such that said housing and said lens together enclose said light source, the light from said light source being projected through said lens and said color layer.

19. A method in accordance with claim 18 wherein:
said light source is a first light source;
said mounting step further includes mounting a second light source within said housing such that light from said first light source is projected in a first preselected direction and light from said second light source is projected in a second preselected direction, which may be the same as or different from said first direction; and
said housing and said lens together enclose said first and second light sources, such that the light from said second light source is projected through said lens, and the light from said first light source is projected through said lens and said color layer.

20. A method in accordance with claim 18 wherein said lamp assembly is an automotive lamp assembly.

## Patentansprüche

1. Mehrfach beschichtete Linse (4, 10, 20) für eine Lampe, welche umfaßt:
einen transparenten, einstückigen, polymeren Linsenrohling (5, 13) mit einer Innenfläche (6, 15) und einer Außenfläche (7, 14);
eine dünne, durchscheinende, Farbschicht (8, 18), die auf zumindest einem Teil einer ausgewählten der inneren und äußeren Linsenrohlingflächen (6, 7; 15, 14) angeordnet, an denselben angepasst und an demselben festgeklebt ist,
**dadurch gekennzeichnet, daß**
die Farbschicht (8, 18) einen thermoplastischen Polymerfilm von zumindest einer Farbe einschließt, der von einem Abziehbild (47, 50) durch Hitze übertragen worden ist, und daß eine dünne, durchscheinende, Schutzschicht (9, 19), die auf der Farbschicht (8, 18) angeordnet ist und zumindest diese überdeckt, vorgesehen ist.

2. Linse (4, 10) nach Anspruch 1, bei welcher der Film derart gemustert ist, daß er zwei oder mehr Farbbereiche einschließt.

3. Linse (4, 10) nach Anspruch 1, bei welcher der Film derart gemustert ist, daß er Angaben einschließt.

4. Linse nach Anspruch 1, bei welcher zumindest ein Teil der Innenfläche (15) des Linsenrohlings (13) zur Bildung kubischer Reflektoren (16) texturiert ist, um ein Reflexionsmuster (12) zu schaffen, das von der Außenfläche (14) des Linsenrohlings zu sehen ist, sowie die Farbschicht (18) und die schützende Schicht (19) auf der Außenfläche (14) derart angeordnet sind, daß sie das Reflexionsmuster überdecken.

5. Linse (20) nach Anspruch 1, bei welcher die Farbschicht eine erste Farbschicht (22) und die zumindest eine Farbe eine erste Farbe ist, und die weiter aufweist:
eine zweite, dünne, durchscheinende, Farbschicht (23), die auf zumindest einem Teil der ersten Farbschicht (22) zwischen dieser ersten Farbschicht und der Schutzschicht (29) angeordnet, an denselben angepasst und an demselben festgeklebt ist, wobei die zweite Farbschicht einen thermoplastischen Polymerfilm von zumindest einer zweiten Farbe umfaßt, die von der ersten Farbe verschieden ist, und wobei die Schutzschicht (29) auf zumindest der ersten Farbschicht (22) und der zweiten Farbschicht (23) angeordnet ist und diese überdeckt.

6. Linse nach Anspruch 5, bei welcher:
die erste Farbschicht (22) auf der Außenfläche (27a) des Linsenrohlings (26) angeordnet ist und
die beobachtbare Farbe auf der Außenfläche (27a) der mehrfach beschichteten Linse, und
zwar desjenigen Abschnitts der Linse (20), auf welchem die zweite Farbschicht (23) die erste Farbschicht (22) überdeckt, die zweite Farbe darstellt, sobald die Linse von außerhalb der Außenfläche der mehrfach beschichteten Linse erleuchtet wird, hingegen die erste Farbe oder eine Mischung der ersten Farbe und der zweiten Farbe darstellt, wenn die Linse (20) von innerhalb der Innenfläche (27b) des Linsenrohlings erleuchtet wird.

7. Kraftfahrzeuglampe, die eine mehrfach beschichtete Linse (4, 10, 20) nach Anspruch 1 enthält.

8. Lampenanordnung (1) mit:
einem Gehäuse (2),
einer Lichtquelle (3a, 3b), die in dem Gehäuse angebracht ist, und
mit einer mehrfach beschichteten Linse (4, 10, 20) nach Anspruch 1, die an dem Gehäuse befestigt ist, wobei das Gehäuse und die Linse gemeinsam die Lichtquelle einschließen.

9. Lampenanordnung (1) nach Anspruch 8, bei welcher der Film derart gemustert ist, daß er zwei oder mehr Farben umfaßt.

10. Lampenanordnung (1) nach Anspruch 8, bei welcher der Film derart gemustert ist, daß er Angaben umfaßt.

11. Lampenanordnung nach Anspruch 8, bei welcher zumindest ein Abschnitt der Innenfläche (15) des Linsenrohlings (13) zur Bildung von kubischen Reflektoren (16) zwecks Schaffung eines Reflexionsmusters texturiert ist, das von außerhalb der Anordnung zu sehen ist, und bei welcher die Farbschicht (18) und die Schutzschicht (19) auf der Außenfläche (14) des Linsenrohlings angeordnet sind, um zumindest die Reflexionsschicht zu überdecken.

12. Lampenanordnung (1) nach Anspruch 8, bei welcher die Farbschicht eine erste Farbschicht (22) und die zumindest eine Farbe eine erste Farbe ist, und die ferner umfaßt:
eine zweite, dünne, durchscheinende, Farbschicht (23), die auf zumindest einem Teil der ersten Farbschicht (22) zwischen dieser ersten Farbschicht und der Schutzschicht (29) angeordnet, an denselben angepasst und an demselben festgeklebt ist, wobei die zweite Farbschicht einen thermoplastischen Polymerfilm von zumindest einer Farbe umfaßt, und
wobei die dünne, durchscheinende, Schutzschicht (29) auf zumindest der ersten Farbschicht (22) und der zweiten Farbschicht (23) angeordnet ist und diese überdeckt.

13. Lampenanordnung nach Anspruch 12, bei welcher
die erste Farbschicht auf der Außenfläche des Linsenrohlings angeordnet ist, und
die von außerhalb der Anordnung beobachtbare Farbe desjenigen Abschnitts der Linse (20), auf welchem die zweite Farbschicht (23) die erste Farbschicht (22) überdeckt, die zweite Farbe darstellt, wenn die Lichtquelle ausgeschaltet wird, hingegen die erste Farbe oder eine Mischung der ersten Farbe und der zweiten Farbe darstellt, wenn die Lichtquelle angeschaltet wird.

14. Lampenanordnung nach Anspruch 8, bei welcher die Lichtquelle eine erste Lichtquelle ist, die in dem Gehäuse derart angeordnet ist, daß Licht von dieser ersten Lichtquelle in eine erste Richtung projiziert wird, und welche ferner umfaßt:
eine zweite Lichtquelle, die innerhalb des Gehäuses derart angebracht ist, daß Licht von dieser zweiten Lichtquelle in eine zweite Richtung projiziert wird, die die gleiche wie die erste Richtung oder von dieser verschieden sein kann,
und bei welcher das Gehäuse und die Linse gemeinsam sowohl die erste als auch die zweite Lichtquelle einschließen, und wobei
das Licht von zumindest einer der ersten und zweiten Lichtquellen derart durch die Linse und
die Farbschicht projiziert wird, daß die von außerhalb der Anordnung beobachtbare Farbe des Lichts der ersten Lichtquelle von derjenigen des Lichts der zweiten Lichtquelle verschieden ist.

15. Lampenanordnung nach Anspruch 8, bei welcher dieselbe eine Kraftfahrzeuglampenanordnung ist.

16. Verfahren zur Herstellung einer mehrfach beschichteten Linse für eine Lampe, welches umfaßt:
Bilden eines transparenten, einstückigen, polymeren Linsenrohlings mit einer Innenfläche und einer Außenfläche,
Aufbringen einer dünnen, anhaftenden, durchscheinenden, Farbschicht konform auf zumindest einem Abschnitt einer ausgewählten der Innenfläche und der Außenfläche des Linsenrohlings,
**gekennzeichnet durch**
das Aufbringen der Farbschicht mittels Übertragung von einer Trägeroberfläche mit Hilfe von Wärme, wobei die Farbschicht einen thermoplastischen Polymerfilm von zumindest einer Farbe umfaßt, und
das Überziehen zumindest der Farbschicht mit einer dünnen, anhaftenden, durchscheinenden, Schutzschicht.

17. Verfahren nach Anspruch 16, bei welchem die Lampe eine Kraftfahrzeuglampe ist.

18. Verfahren zur Herstellung einer Lampenanordnung, welches die folgenden Schritte umfaßt:
Bilden eines transparenten, einstückigen, polymeren Linsenrohlings mit einer Innenfläche und einer Außenfläche,
Aufbringen einer dünnen, anhaftenden, durchscheinenden, Farbschicht konform auf zumindest einem Abschnitt einer ausgewählten der Innenfläche und der Außenfläche des Linsenrohlings, und zwar mittels Übertragung von einer Trägeroberfläche mit Hilfe von Wärme, wobei die Farbschicht einen thermoplastischen Polymerfilm von zumindest einer Farbe umfaßt,
Überziehen zumindest der Farbschicht mit einer dünnen, anhaftenden, durchscheinenden, Schutzschicht, um eine mehrfach beschichtete Linse zu bilden,
Anbringen einer Lichtquelle in einem Gehäuse derart, daß Licht von dieser Lichtquelle in eine vorgewählte Richtung projiziert wird, und
Befestigen der mehrfach beschichteten Linse in dem Gehäuse, derart, daß das Gehäuse und die Linse gemeinsam die Lichtquelle einschließen, wobei das Licht von der Lichtquelle durch die Linse und die Farbschicht projiziert wird.

19. Verfahren nach Anspruch 18, bei welchem:
die Lichtquelle eine erste Lichtquelle ist,
der Schritt des Anbringens außerdem das Anbringen einer zweiten Lichtquelle innerhalb des Gehäuses einschließt, derart, daß Licht von dieser ersten Lichtquelle in eine erste vorgewählte Richtung projiziert wird und daß Licht von dieser zweiten Lichtquelle in eine zweite vorgewählte Richtung projiziert wird, die die gleiche wie die erste Richtung oder von dieser verschieden sein kann, und
bei welchem das Gehäuse und die Linse gemeinsam sowohl die erste als auch die zweite Lichtquelle einschließen, derart, daß Licht von der zweiten Lichtquelle durch die Linse und
das Licht von der ersten Lichtquelle durch die Linse und die Farbschicht projiziert werden.

20. Verfahren nach Anspruch 18, bei welchem die Lampenanordnung eine Kraftfahrzeuglampenanordnung ist.

## Revendications

1. Lentille (4, 10, 20) à plusieurs couches pour une lampe, la lentille comprenant :
un disque (5, 13) polymère, unitaire et transparent, formant lentille ayant une surface (6, 15) intérieure et une surface (7, 14) extérieure;
une mince couche (8, 18) colorée, translucide, placée sur au moins une partie (4b, 12) de l'une sélectionnée des surfaces (6, 7; 15, 14) intérieure et extérieure de disque formant lentille, s'y conformant et y étant fixée, **caractérisée en ce que** la couche (8, 18) colorée comprend une pellicule de polymère thermoplastique d'au moins une couleur transférée à partir d'une image (47, 50) à décalquer par transfert thermique; et
un mince revêtement (9, 19) transparent, protecteur, disposé sur au moins la couche (8, 18) colorée et la recouvrant.

2. Lentille (4, 10) suivant la revendication 1, dans laquelle la pellicule est configurée de manière à comprendre deux régions colorées ou plus de deux régions colorées.

3. Lentille (4, 10) suivant la revendication 1, dans laquelle la pellicule est configurée de manière à comprendre des indices.

4. Lentille suivant la revendication 1, dans laquelle au moins une partie de la surface (15) intérieure du disque (13) formant lentille est texturée pour former des réflecteurs (16) cubiques, afin d'obtenir un motif (12) de réflexion visible à partir de la surface (14) extérieure du disque formant lentille; et la couche (18) colorée et le revêtement (19) protecteur sont disposés sur la surface (14) extérieure de manière à recouvrir au moins le motif (12) de réflexion.

5. Lentille (20) suivant la revendication 1, dans laquelle la couche colorée est une première couche (22) colorée et la au moins une couleur comprend une première couleur; et comprenant en outre :
une deuxième couche (23) colorée, mince et translucide, disposée sur au moins une partie de la première couche (22) colorée entre la première couche colorée et le revêtement (29) protecteur, en s'y conformant et en y étant fixée, la deuxième colorée comprenant une pellicule de polymère thermoplastique d'au moins une deuxième couleur différente de la première couleur; le revêtement (29) protecteur étant disposé sur la première couche (22) colorée et sur la deuxième couche (23) colorée et les recouvrant.

6. Lentille (20) suivant la revendication 5, dans laquelle :
la première couche (22) colorée est disposée sur la surface (27a) extérieure du disque (26) formant lentille; et
la couleur que l'on peut observer à la surface (27a) extérieure de la lentille à plusieurs couches de la partie de la lentille (20) sur laquelle la deuxième couche (23) colorée recouvre la première couche (22) colorée est la deuxième couleur lorsque la lentille est éclairée à partir de l'extérieur de la surface extérieure de la lentille à plusieurs couches et la première couleur ou un mélange de la première couleur et de la deuxième couleur lorsque la lentille (20) est éclairée de l'intérieur de la surface (27b) intérieure du disque formant lentille.

7. Lampe pour automobile comportant une lentille (4, 10, 20) à plusieurs couches suivant la revendication 1.

8. Ensemble (1) formant lampe comprenant :
un boîtier (2);
une source (3a, 3b) lumineuse montée à l'intérieur du boîtier; et une lentille (4, 10, 20) à plusieurs couches suivant la revendication 1 fixée au boîtier, le boîtier et la lentille enfermant ensemble la source lumineuse.

9. Ensemble (1) formant lampe suivant la revendication 8, dans lequel la pellicule est configurée de manière à comprendre deux couleurs ou plus de deux couleurs.

10. Ensemble (1) formant lampe suivant la revendication 8, dans lequel la pellicule est configurée de manière à comprendre des indices.

11. Ensemble (1) formant lampe suivant la revendication 8, dans lequel au moins une partie de la surface (15) intérieure du disque (13) formant lentille est texturée pour former des réflecteurs (16) cubiques, afin d'obtenir un motif (12) de réflexion visible à partir de l'extérieur de l'ensemble; et la couche (18) colorée et le revêtement (19) protecteur sont disposés sur la surface (14) extérieure du disque formant lentille de manière à recouvrir au moins le motif (12) de réflexion.

12. Ensemble (1) formant lampe suivant la revendication 8, dans lequel la couche colorée est une première couche (22) colorée et la au moins une couleur comprend une première couleur; et comprenant en outre :
une deuxième couche (23) colorée, mince et translucide, disposée sur au moins une partie de la première couche (22) colorée entre la première couche colorée et le revêtement (29) protecteur en s'y conformant et en y étant fixée, la deuxième couche colorée comprenant une pellicule de polymère thermoplastique d'au moins une couleur; le revêtement (29) mince, transparent et protecteur étant disposé au moins sur la première couche (22) colorée et la deuxième couche (23) colorée et les recouvrant.

13. Ensemble formant lampe suivant la revendication 12, dans lequel:
la première couche colorée est disposée sur la surface extérieure du disque formant lentille; et
la couleur que l'on peut observer depuis l'extérieur de l'ensemble de la partie de la lentille sur laquelle la deuxième couche colorée recouvre la première couche colorée est la deuxième couleur lorsque la source lumineuse est débranchée et la première couleur ou un mélange de la première couleur et de la deuxième couleur lorsque la source lumineuse est branchée.

14. Ensemble formant lampe suivant la revendication 8, dans lequel la source lumineuse est une première source lumineuse montée à l'intérieur du boîtier de façon à ce que de la lumière provenant de la première source lumineuse soit projetée dans une première direction; et comprenant en outre :
une deuxième source lumineuse montée à l'intérieur du boîtier de façon à ce que de la lumière provenant de la deuxième source lumineuse soit projetée dans une deuxième direction, qui peut être la même direction que la première direction ou une direction différente de la première direction;
et dans lequel le boîtier et la lentille enferment ensemble à la fois la première source lumineuse et la deuxième source lumineuse; et la lumière provenant d'au moins l'une de la première et de la deuxième source lumineuse est projetée à travers la lentille et la couche colorée de façon à ce que la couleur que l'on peut observer, depuis l'extérieur de l'ensemble, de la lumière provenant de la première source lumineuse soit différente de celle de la lumière provenant de la deuxième source lumineuse.

15. Ensemble formant lampe suivant la revendication 8, dans lequel l'ensemble formant lampe est un ensemble formant lampe pour automobile.

16. Procédé de fabrication d'une lentille à plusieurs couches pour une lampe, procédé dans lequel :
on forme un disque transparent, unitaire et polymère, formant lentille ayant une surface intérieure et une surface extérieure;
on applique une mince couche colorée, adhérente et translucide sur au moins une partie de l'une sélectionnée de la surface intérieure et de la surface extérieure du disque formant lentille et on l'y conforme, **caractérisé en ce que** l'on applique la couche colorée par transfert thermique à partir d'une surface de support, la couche colorée comprenant une pellicule de polymère thermoplastique d'au moins une couleur; et
on revêt au moins la couche colorée d'un mince revêtement adhérent, transparent et protecteur.

17. Procédé suivant la revendication 16, dans lequel la lampe est une lampe pour automobile.

18. Procédé de fabrication d'un ensemble de lampe, procédé comprenant les étapes dans lesquelles :
on forme un disque transparent, unitaire et polymère, formant lentille, ayant une surface intérieure et une surface extérieure;
on applique par transfert thermique à partir d'une surface de support une mince couche colorée, adhérente et translucide sur au moins une partie de l'une sélectionnée des surfaces intérieure et extérieure du disque formant lentille et on l'y conforme, la couche colorée comprenant une pellicule de polymère thermoplastique d'au moins une couleur;
on revêt au moins la couche colorée d'un mince revêtement adhérent, transparent et protecteur pour former une lentille à plusieurs couches;
on monte une source lumineuse à l'intérieur du boîtier de façon à ce que de la lumière provenant de la source lumineuse soit projetée dans une direction sélectionnée à l'avance; et
on fixe la lentille à plusieurs couches au boîtier de façon à ce que le boîtier et la lentille enferment ensemble la source lumineuse, la lumière provenant de la source lumineuse étant projetée à travers la lentille et la couche colorée.

19. Procédé suivant la revendication 18, dans lequel :
la source lumineuse est une première source lumineuse;
dans le stade de montage, on monte en outre une deuxième source lumineuse à l'intérieur du boîtier de façon à ce que de la lumière provenant de la première source lumineuse soit projetée dans une première direction sélectionnée à l'avance et que de la lumière provenant de la deuxième source lumineuse soit projetée dans une deuxième direction sélectionnée à l'avance, qui peut être la même que la première direction ou qui peut être différente de la première direction; et
le boîtier et la lentille enferment ensemble les première deuxième sources lumineuses de façon à ce que la lumière provenant de la deuxième source lumineuse soit projetée à travers la lentille, et de façon à ce que lumière provenant de la première source lumineuse soit projetée à travers la lentille et la couche colorée.

20. Procédé suivant la revendication 18, dans lequel l'ensemble formant lampe est un ensemble formant lampe pour automobile.
